# EUROPÄISCHE PATENTSCHRIFT

(11) **EP 3 094 062 B1**
(45) Veröffentlichungstag und Bekanntmachung des Hinweises auf die Patenterteilung: **22.08.2018**
(21) Anmeldenummer: 16168098.8
(22) Anmeldetag: 03.05.2016
(51) Int. Cl.: H04L 29/06

(54) **VERFAHREN ZUR KOMMUNIKATION ZWISCHEN EINER KOMMUNIKATIONSEINHEIT EINES GERÄTS UND EINER EXTERNEN KOMMUNIKATIONSEINHEIT ÜBER EINE MOBILE TELEFONEINHEIT**
METHOD FOR COMMUNICATION BETWEEN A COMMUNICATION UNIT OF A DEVICE AND AN EXTERNAL COMMUNICATION UNIT VIA A MOBILE TELEPHONE UNIT
PROCÉDÉ DE COMMUNICATION ENTRE UNE UNITÉ DE COMMUNICATION D'UN APPAREIL ET UNE UNITÉ DE COMMUNICATION EXTERNE PAR L'INTERMÉDIAIRE D'UN SYSTÈME DE TÉLÉPHONIE MOBILE

(30) Priorität: 11.05.2015 DE 102015208672; 24.11.2015 DE 102015223229
(43) Veröffentlichungstag der Anmeldung: 16.11.2016
(73) Patentinhaber: Volkswagen Aktiengesellschaft, 38440 Wolfsburg (DE)
(72) Erfinder: LÜNNEMANN, Patrik, 10553 Berlin (DE); DIETZE, Carsten, 38179 Schwülper (DE)

(56) Entgegenhaltungen:
- EP-A1- 1 914 954
- US-A1- 2010 014 459
- US-A1- 2014 068 713

## Beschreibung

Die Erfindung betrifft ein Verfahren zur Kommunikation zwischen einer Kommunikationseinheit eines Geräts und einer externen Kommunikationseinheit über eine mobile Telefoneinheit. Die Erfindung betrifft weiterhin ein entsprechendes System. Die Datenverbindung zwischen Mobiltelefonen und Geräten, wie zum Beispiel Fahrzeugen, dort meist der sogenannten Head Unit (Geräteeinheit), ist in einigen Märkten beschränkt. So können Service Provider für mobile Telefoneinheiten wie zum Beispiel Mobiltelefone oder Smartphones bestimmte Dienstleistungen vertraglich oder technisch einschränken, zum Beispiel beim sogenannten Tethering, bei dem das Mobiltelefon die Rolle eines Modems übernimmt. Viele Dienste auf der Head Unit setzen allerdings genau auf diese Verbindung auf.

Diverse serielle Protokolle, welche für den Datenaustausch zwischen Fahrzeug und Mobiltelefon genutzt werden können wie zum Beispiel Bluetooth Serial Port Profile, Android Open Accessory Protocol oder IOS external Accessories bieten keine native TCP/IP (Transmission Control Protocol/Internet Protocol) Verbindung an. Durch die fehlende direkte TCP/IP Unterstützung können Dienste, welche auf eine Online Verbindung angewiesen sind, in Märkten oder Mobiltelefonen, die kein Tethering anbieten, nicht genutzt werden.

Auch existieren Geräte, wie zum Beispiel Haushaltsgeräte, welche keine TCP/IP-Schnittstelle enthalten, so dass derartige Geräte keine Online Verbindung über das TCP/IP Protokoll aufbauen können.

Im Falle der fehlenden Tethering Aktivierung müssen Kunden die Freischaltung für das Tethering am Smartphone durch Zukauf entsprechender Optionen beim Mobilfunk-Provider durchführen. Im Falle einer fehlenden Tethering Option kann der Fall auftreten, dass der Kunde ein neues Mobiltelefon kaufen muss, wenn er die volle Funktionalität eines Fahrzeugs nutzen möchte.

DE 10 2010 007 883 A1 offenbart eine Vorrichtung zum Empfang und zur Wiedergabe von Informationen in einem Fahrzeug, wobei im Fall, dass die Empfangsqualität einer ersten Information einen vorgebbaren Schwellwert unterschreitet, ein Sende- und Empfangsmittel von einer zweiten Informationsquelle bereitgestellte, von der Art der selektierten ersten Informationen abhängige zweite Informationen abrufbar sind.

WO 2005/004431 A2 offenbart ein Kraftfahrzeug-Multimediasystem mit einer in einem Kraftfahrzeug eingebauten Multimedia Zentralstation und einer weiteren optischen, grafikfähigen Anzeigeeinheit, die tragbar und drahtlos mit der Zentralstation verbindbar ist.

Druckschrift US 2014/0068713 A1 schlägt ein Verfahren zum Bereitstellen von Kommunikation unter Verwendung einer Head Unit eines Fahrzeugs vor.

In Druckschrift US 2010/0014459 A1 wird ein Verfahren zur Verwaltung von Datendiensten in einer Multi-Prozessor-Computer-Umgebung vorgeschlagen.

Druckschrift EP 1 914 954 A1 schlägt ein Verfahren zur Übertragung von Datenpaketen vor.

Der Erfindung liegt die Aufgabe zugrunde, eine Online-Verbindung mittels einer mobilen Telefoneinheit auch ohne TCP/IP-Verbindung zur Verfügung zu stellen.

Diese Aufgabe wird gelöst durch ein Verfahren gemäß Anspruch 1 sowie ein System gemäß Anspruch 7.

Das erfindungsgemäße Verfahren zur Kommunikation zwischen einer Kommunikationseinheit eines Geräts und einer externen Kommunikationseinheit über eine mobile Telefoneinheit sieht vor, dass zwischen der Kommunikationseinheit des Geräts und der mobilen Telefoneinheit eine serielle Verbindung aufgebaut wird, wobei ein Protokoll der seriellen Verbindung ein Datenfeld und einen ersten Header aufweist, dass zwischen der mobilen Telefoneinheit und der externen Kommunikationseinheit eine Verbindung aufgebaut wird, dass in der mobilen Telefoneinheit aus dem ersten Header ein zweiter Header für die Verbindung generiert wird und dass das Datenfeld unverändert von der seriellen Verbindung in die Verbindung übertragen wird. Ein Aufbau einer Kommunikationsverbindung zwischen der Kommunikationseinheit des Geräts und der externen Kommunikationseinheit umfasst, dass von der Kommunikationseinheit über die serielle Verbindung eine Socket-Anfrage an die mobile Telefoneinheit gestellt wird, dass von der mobilen Telefoneinheit über die Verbindung eine Nachricht zum Bereitstellen eines Sockets an die externe Kommunikationseinheit gesendet wird, dass von der externen Kommunikationseinheit über die Verbindung eine Nachricht zum bereitgestellten Socket an die Eine mögliche verschlüsselte Verbindung, zum Beispiel via HTTPS zwischen der Kommunikationseinheit des Fahrzeugs und der externen Kommunikationseinheit wird nicht berührt. Ein privater Schlüssel der Verbindung befindet sich lediglich bei der externen Kommunikationseinheit und die Kommunikationseinheit des Fahrzeugs wie üblich den Kommunikationspartner auf Gültigkeit überprüfen. Somit besteht trotz Umsetzung oder der Schnittstelle im Smartphone eine transparente Verbindung zwischen den beiden Endpunkten.

Für die Kommunikation zwischen der externen Kommunikationseinheit und dem Smartphone wird zum Beispiel die verbreitete TCP Verbindung (Transmission Control Protocol, Übertragungssteuerungsprotokoll) verwendet. Zwischen der Kommunikationseinheit des Fahrzeugs und der mobilen Telefoneinheit wird eine serielle Verbindung aufgebaut, wobei ein Protokoll der seriellen Verbindung ein Datenfeld und einen Header oder Headerfeld aufweist. Die serielle Verbindung wird zum Beispiel über ein Accessory Protokoll wie AOAP (Android Open Accessory Protocol) oder iAP2 (Apple Accessory Protocol) realisiert. Dies sind Verbindungen beziehungsweise Protokolle, welche eine Verbindung, zum Beispiel über USB, mit weiteren Geräten erlaubt. Es hat sich gezeigt, dass dieses Protokoll keinen Einschränkungen hinsichtlich Tethering unterworfen ist. Somit erlaubt die Erfindung eine Bereitstellung einer durchgehenden Kommunikationsverbindung trotz Tethering. Die Software oder App beziehungsweise Schnittstelle auf dem Smartphone übersetzt die Header beziehungsweise passt sie zwischen den beiden Verbindungen zum Fahrzeug und zur externen Kommunikationseinheit, zum Beispiel im Backend, an. Anders ausgedrückt, sind der Header der seriellen Verbindung und die Software/Gateway eingerichtet, einen oder mehrere TCP Header zu erzeugen, so dass eine für die Endpunkte transparente Datenverbindung entsteht, wobei das oder die Datenfelder dabei unverändert belassen werden.

Das erfindungsgemäße Verfahren hat den Vorteil, dass keine Kosten für zusätzliche Hardware entstehen. Diese Lösung ist auch nachträglich, zum Beispiel per App, auf handelsüblichen Telefonen installierbar und erfordert keine spezielle Version eines Telefons. So kann auf einfache Art und Weise eine TCP/IP Verbindung für ein Gerät zur Verfügung gestellt werden, dass nicht über eine derartige Schnittstelle, aber eine Schnittstelle einer seriellen Verbindung verfügt. Dieser serielle Dienst wird über das neu vorgestellte Protokoll beziehungsweise deren Software in einen weiteren Dienst, den das Gerät nicht beherrscht, wie einen paketbasierten Dienst, eine paketbasierte Verbindung oder eine Client-Server-Verbindung übertragen oder umgesetzt.

Die serielle Verbindung kann ein Protokoll
gemäß Bluetooth Serial Port umfassen. Eine Schnittstelle oder Kommunikationseinheit für ein Bluetooth Protokoll, wie zum Beispiel Bluetooth LE (Low Energy), besitzen viele Geräte, wie Fahrzeuge oder Haushaltsgeräte, und viele mobile Telefoneinheiten, wie zum Beispiel Smartphones, Tablets und dergleichen. Dies erlaubt eine einfache Implementierung des Verfahrens.

Die serielle Verbindung kann ein accessory Protokoll der mobilen Telefoneinheit umfassen. Ein accessory Protokoll, wie zum Beispiel Android Open Accessory Protocol oder IOS external Accessories, ist zumindest bei mobilen Telefoneinheiten weit verbreitet. In dem Gerät kann es ebenfalls bereits implementiert sein oder als zusätzliches Protokoll einfach, zum Beispiel durch eine Softwareroutine, implementiert werden. Diese Implementierung kann bereits bei der Herstellung des Geräts oder durch ein Softwareupdate vorgenommen werden.

Die serielle Verbindung kann eine USB-Verbindung umfassen. Neben den oben beschriebenen drahtlosen seriellen Verbindungen kann auch eine drahtgebundene serielle Verbindung zum Einsatz gelangen, zum Beispiel eine USB-Verbindung. Das neue Protokoll der seriellen Verbindung wird dann über die USB Schnittstelle übertragen beziehungsweise verwendet.

Die Verbindung kann eine TCP/IP Verbindung sein. Diese paketbasierte Verbindung ist zuverlässig und weit verbreitet zur Bereitstellung von Online-Zugängen.

Die Verbindung und/oder die serielle Verbindung können verschlüsselt werden. Diese Verschlüsselung kann die Verschlüsselung der beiden Kommunikationsstrecken zwischen dem Gerät und der mobilen Telefoneinheit sowie zwischen der mobilen Telefoneinheit und der externen Kommunikationseinheit umfassen. Die Umsetzung zwischen den beiden Protokollen auf diesen Verbindungen ist dank der Protokollstruktur ebenfalls gesichert. Denn in der mobilen Telefoneinheit werden nur die Header, auch Zusatzinformationen oder Metadaten genannt, der Datenübertragung bearbeitet, das oder die Datenfelder bleiben hingegen unverändert.

Ein erfindungsgemäßes System umfasst ein Gerät und eine mobile Telefoneinheit. Das Gerät umfasst eine Kommunikationseinheit, wobei die Kommunikationseinheit des Geräts und die mobile Telefoneinheit eingerichtet sind, miteinander eine serielle Verbindung aufzubauen. Ein Protokoll der seriellen Verbindung weist ein Datenfeld und einen ersten Header auf. Die mobile Telefoneinheit ist eingerichtet, mit einer externen Kommunikationseinheit eine Verbindung aufzubauen. Ferner ist die mobile Telefoneinheit eingerichtet, aus dem ersten Header einen zweiter Header für die Verbindung zu
generieren und das Datenfeld unverändert von der seriellen Verbindung in die Verbindung zu übertragen. Zum Aufbau einer Kommunikationsverbindung zwischen der Kommunikationseinheit des Geräts und der externen Kommunikationseinheit Ist die Kommunikationseinheit eingerichtet, über die serielle Verbindung eine Socket-Anfrage an die mobile Telefoneinheit zu stellen. Die mobile Telefoneinheit ist eingerichtet, über die Verbindung eine Nachricht zum Bereitstellen eines Sockets an die externe Kommunikationseinheit zu senden und über die Verbindung eine Nachricht zum bereitgestellten Socket von der externen Kommunikationseinheit zu empfangen. Ferner ist die mobile Telefoneinheit eingerichtet, über die serielle Verbindung eine Nachricht zum bereitgestellten Socket an die Kommunikationseinheit zu senden. Es gelten die gleichen Vorteile und Modifikationen wie zuvor beschrieben.

Ein Socket kann für die serielle Verbindung vorgesehen sein. Mittels eines einfach zu installierenden Sockets kann sowohl die mobile Telefoneinheit als auch die Kommunikationseinheit für das neue Protokoll vorbereitet werden.

Das Gerät kann ein Fahrzeug sein. Da Onlinedienste für Fahrzeuge häufig auf im Fahrzeug mitgeführte mobile Telefoneinheiten zurückgreifen, das dafür erforderliche Tethering aber nicht immer zur Verfügung steht, bietet sich das vorliegende Verfahren insbesondere für Fahrzeuge an.

Das Gerät kann ein Haushaltsgerät sein. Zum Beispiel könnten Haushaltsgeräte wie Waschmaschinen oder Kühlschränke lediglich über eine Bluetooth Kommunikation verfügen, jedoch auf eine Online-Verbindung angewiesen sein. Auch in diesem Fall bietet sich das vorliegende Verfahren an.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems und Verfahrens zur Kommunikation zwischen einer Kommunikationseinheit eines Geräts und einer externen Kommunikationseinheit; und
- Figur 2: eine schematische Darstellung eines Schichtenmodells der Kommunikationsverbindung des Systems.

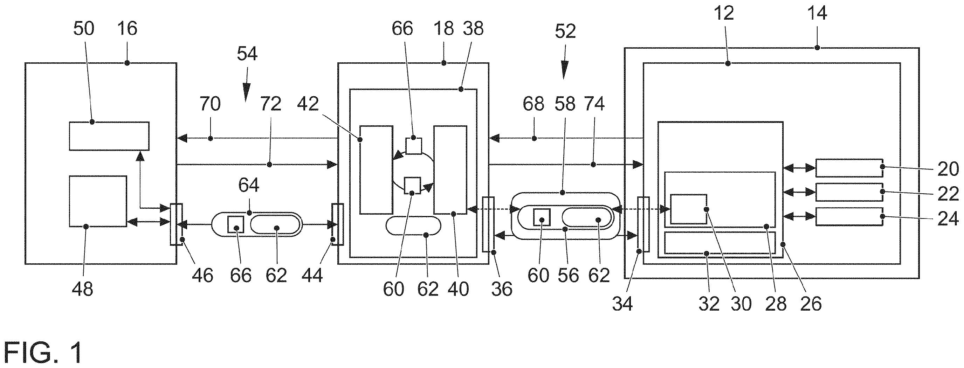

Figur 1 zeigt eine schematische Darstellung eines Systems 10 zur Kommunikation zwischen einer Kommunikationseinheit 12 eines Geräts 14 und einer externen Kommunikationseinheit 16 via einer mobilen Telefoneinheit 18.

Das Gerät 10 kann ein Fahrzeug, wie zum Beispiel einem PKW, LKW, Motorrad, Bus oder Bahn, sein. Als Fahrzeug werden hier sämtliche Land-, Luft- und Wasserfahrzeuge angesehen. Bei einem Fahrzeug kann die Kommunikationseinheit 12 ein Steuergerät, zum Beispiel für eine Infotainmenteinheit, sein. Das Gerät 10 kann auch ein Haushaltsgerät, zum Beispiel auch in einem Smart-Home Verbund, sein.

Die externe Kommunikationseinheit 16 kann ein Backend, das heißt eine Serverstruktur, eines Dienstanbieters, zum Beispiel bei dem oder im Auftrag des Geräteherstellers sein. Die externe Kommunikationseinheit 16 kann in einer Struktur angeordnet sein, wie dargestellt, oder auf mehrere Strukturen verteilt ausgebildet sein.

Die mobile Telefoneinheit 18 kann zum Beispiel ein Smartphone, ein Tablet oder ähnliches sein. Sie kann auch ein tragbarer Computer sein.

Die Kommunikationseinheit 12 enthält mehrere Features oder Funktionalitäten 20, 22, 24 wie zum Beispiel Navigation, Verkehrsstatus, welche mit der externen Kommunikationseinheit 16 kommunizieren. Dazu sind sie mit den Core-Services 26 der Kommunikationseinheit 12 verbunden, welche in Hard- und/oder Software ausgeführt sind. Innerhalb der Core-Services 26 ist ein Network Manager 28 vorgesehen, welcher die Kommunikationsverbindungen aufbaut und betreibt. Dort ist ein SPL (Socket Proxy Layer) Socket 30 oder Port implementiert, der den Aufbau, Abbau und die Aufrechterhaltung einer SPL Verbindung ausführt. Ein Accessory Protocol Support 32 ist vorhanden, um Kompatibilität mit den Accessory Protokollen zu gewährleisten. Der SPL Socket 30 und der Accessory Protocol Support 32 sind in Hard- und/oder Software ausgeführt. Die Kommunikationseinheit 12 enthält ferner eine serielle Schnittstelle 34, die hier in diesem Beispiel als USB (Universal Serial Bus) Schnittstelle ausgeführt ist. Der SPL Socket 30 ist mit der seriellen Schnittstelle 34 verbunden und kommuniziert über die serielle Schnittstelle 34 mit der mobilen Telefoneinheit 18.

Die mobile Telefoneinheit 18 hat eine korrespondierende oder kompatible serielle Schnittstelle 36. Eine Software 38, die zur Handhabung der Kommunikation eingerichtet ist, hat Zugriff auf diese Schnittstelle 36. In der Software 38 ist ein SPL Socket 40 vorhanden, der kompatibel mit dem SPL Socket 30 der Kommunikationseinheit 12 ist. Beide SPL Sockets 30, 40 können identisch ausgebildet sein oder wenn nötig an das jeweilige Betriebssystem oder die jeweilige Schnittstelle 34, 36 angepasst sein. In der Software 38 ist weiter ein TCP Socket 42 vorhanden, der eine TCP/IP Kommunikation zwischen der mobilen Telefoneinheit 18 und dem Backend 16 handhabt. Für diese Kommunikation umfasst die mobile Telefoneinheit 18 eine weitere Schnittstelle 44, auf welche die Software, speziell der TCP Socket 42, Zugriff hat. Alle hier genannten Schnittstellen oder Verbindungen sind bidirektional ausgeführt, so dass eine Kommunikation in beide Richtungen möglich ist. Die Schnittstelle 44 ist hier zum Beispiel eine Schnittstelle nach einem Mobilfunkstandard, wie zum Beispiel 2G, 3G, LTE oder 4G.

In der externen Kommunikationseinheit 16 ist eine korrespondierende oder kompatible Schnittstelle 46 vorhanden. Diese Schnittstelle 46 ist der Eintrittspunkt in die externe Kommunikationseinheit 16 und gewährt Zugriff auf beziehungsweise Kommunikation mit mehreren Features oder Funktionalitäten 48 und 50. Diese Funktionalitäten umfassen Datenbanken, Sicherheitseinrichtungen wie Verschlüsselungen, Dienste für Navigation usw.

Zuvor wurden die Kommunikationsteilnehmer, nämlich die Kommunikationseinheit 12, die mobile Telefoneinheit 18 und die externe Kommunikationseinheit 16 beschrieben. Im Folgenden werden die Verbindungen und die Kommunikation zwischen den Teilnehmern beschrieben.

Zwischen der Kommunikationseinheit 12 und der mobilen Telefoneinheit 18 ist beziehungsweise wird eine serielle Verbindung 52 gemäß dem SPL (Socket Proxy Layer) Protokoll aufgebaut und zwischen der mobilen Telefoneinheit 18 und der externen Kommunikationseinheit 16 ist beziehungsweise wird eine TCP Verbindung 54 aufgebaut. In der mobilen Telefoneinheit 18 wird zwischen den beiden Protokollen SPL und TCP umgesetzt, wie im Folgenden beschrieben wird.

Die serielle Verbindung 52 setzt auf USB auf und verwendet das SPL Protokoll 56 sowie ein Accessory Protokoll 58. Das SPL Protokoll 56 setzt auf das Accessory Protokoll 58 auf. Gemäß dem SPL Protokoll 56 ist ein SPL Header, hier erster Header 60 genannt, vorgesehen. Ein derartiger erster Header 60 enthält Übertragungsparameter, wie zum Beispiel Sender, Empfänger, Datenraten usw. Jede Nachricht, die über die serielle Verbindung 52 geschickt wird hat zumindest einen ersten Header 60. Reine Status- oder Servicenachrichten können lediglich aus einem ersten Header 60 bestehen. Nutznachrichten, mit denen Daten transportiert werden sollen, umfassen zusätzlich zu dem ersten Header 60 ein oder mehrere Datenfelder 62. Diese Datenfelder 62 enthalten Daten, die von der Kommunikationseinheit 14 zu der externen Kommunikationseinheit 16 übertragen werden, beziehungsweise von der externen Kommunikationseinheit 16 zu der Kommunikationseinheit 14 übertragen werden. Das SPL Protokoll 56 agiert dabei als Brückenlösung, das die Kommunikationseinheit 14 aufgrund unterschiedlicher Schnittstellen nicht direkt mit der externen Kommunikationseinheit 16 kommunizieren kann.

Die TCP Verbindung 54 verwendet ein TCP Protokoll 64. Das TCP Protokoll 64 umfasst einen TCP Header, hier zweiter Header 66 genannt. Ein derartiger zweiter Header 66 enthält Übertragungsparameter oder Übertragungsdaten, wie zum Beispiel Sender, Empfänger, Datenraten usw. Jede Nachricht, die über die TCP Verbindung 54 geschickt wird hat zumindest einen zweiten Header 66. Reine Status- oder Servicenachrichten können lediglich aus einem zweiten Header 66 bestehen. Nutznachrichten, mit denen Daten transportiert werden sollen, umfassen zusätzlich zu dem zweiten Header 66 ein oder mehrere Datenfelder 62. Diese Datenfelder 62 enthalten Daten, die von der Kommunikationseinheit 14 zu der externen Kommunikationseinheit 16 übertragen werden, beziehungsweise von der externen Kommunikationseinheit 16 zu der Kommunikationseinheit 14 übertragen werden.

In der mobilen Telefoneinheit 18, genauer gesagt in dem Programm 38, das zum Beispiel eine App sein kann, wird zwischen dem SPL Protokoll 56 und dem TCP Protokoll 64 umgesetzt. Dabei werden lediglich die Header 60, 66 verarbeitet, die Datenfelder 62 bleiben unverändert. Das heißt dass das Datenfeld 62 einer Nachricht oder Übertragung gemäß dem SPL Protokoll 56 exakt dem Datenfeld 62 einer Nachricht oder Übertragung gemäß dem TCP Protokoll 64 entspricht.

Für die Umsetzung der Header 60, 66 sind in der Software 38 sowohl ein SPL Socket 40 als auch ein TCP Socket 42 implementiert. Ein von der Kommunikationseinheit 14 stammender erster Header 60 wird dort empfangen und dessen Übertragungsdaten werden extrahiert und analysiert. Auf Basis dieser Übertragungsdaten wird von der Software 38 ein zweiter Header 66 für das TCP Protokoll 64 erstellt und an den TCP Socket 42 übertragen. Dieser zweite Header 66 wird dann mit dem oder den Datenfeldern 62 zu einer TCP kompatiblen Nachricht zusammengeführt und an den jeweiligen Empfänger, hier die externe Kommunikationseinheit 16 übertragen.

Umgekehrt wird ein von der externen Kommunikationseinheit 16 stammender zweiter Header 66 von dem TCP Socket 42 empfangen. Dessen Übertragungsdaten werden extrahiert und analysiert. Auf Basis dieser Übertragungsdaten wird von der Software 38 ein erster Header 60 für das SPL Protokoll 56 erstellt und an den SPL Socket 40 übertragen. Dieser erste Header 60 wird dann mit dem oder den Datenfeldern 62 zu einer SPL kompatiblen Nachricht zusammengeführt und an den jeweiligen Empfänger, hier die Kommunikationseinheit 14 übertragen.

Im Folgenden wird der Aufbau der Kommunikationsverbindung beschrieben. In diesem Beispiel geht der Verbindungsaufbau von der Kommunikationseinheit 14 aus, der Aufbau könnte auch von der externen Kommunikationseinheit 16 ausgehen. In einem ersten Schritt 68 sendet die Kommunikationseinheit 14 eine Verbindungsanfrage request socket connection (SPL info) an die mobile Telefoneinheit 18, welche daraufhin in einem zweiten Schritt 70 eine open socket (TCP) Anfrage an die externe Kommunikationseinheit 16 schickt. Die externe Kommunikationseinheit 16 stellt in einem dritten Schritt 72 mit der Nachricht socket available einen Socket zur Verfügung. Die mobile Telefoneinheit 18 wiederum sendet in einem vierten Schritt 74 eine entsprechende Nachricht mit SPL Information an die Kommunikationseinheit 14.

Zusätzlich kann die Verbindung zum Beispiel mittels asymmetrischer Verschlüsselung verschlüsselt werden. Dies kann zum Beispiel von einer Sicherheitseinrichtung 48 der externen Kommunikationseinheit 16 ausgehen und zum Beispiel CAl (Certificate based authentication using immobilizer) nutzen. Ein entsprechendes Gegenstück befindet sich in einer Kerneinheit beziehungsweise den Core Services 26 der Kommunikationseinheit 14. So kann eine durchgehend verschlüsselte HTTPS Verbindung zur Verfügung gestellt werden. Insgesamt ist die gesamte Kommunikationsverbindung zwischen den beiden Endpunkten Kommunikationseinheit 14 und externer Kommunikationseinheit 16 über die mobile Telefoneinheit 18 sehr sicher, da in der mobilen Telefoneinheit 18 die Daten nicht bearbeitet werden.

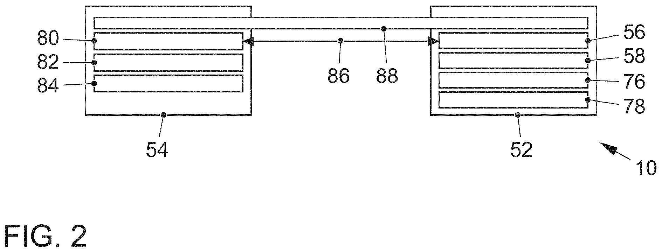

Figur 2 zeigt ein Schichtenmodell der Kommunikationsverbindung. Die serielle Verbindung 52 zwischen der Kommunikationseinheit 14 und der mobilen Telefoneinheit 18 basiert auf dem SPL Protokoll 56. Das SPL Protokoll 56 umfasst zumindest den ersten Header 60 mit mindestens einem Datenfeld 62. Die SPL Sockets 30, 40 und die Umsetzung zwischen SPL und TCP in dem Programm 38 kann ebenfalls als Bestandteil des SPL Protokolls 56 angesehen werden.

Das SPL Protokoll 56 nutzt in diesem Beispiel ein Accessory Protokoll 58, das auf einem Bulk Channel 76 zur Übertragung von Byteströmen einer physischen USB Verbindung 78 aufsetzt. Das SPL Protokoll 56 ist eine serielle Punkt zu Punkt Verbindung mit einem Datenstrom oder Paketen mit einem ersten oder SPL Header 60 und einem oder mehreren Datenfeldern 62.

Die Verbindung 54 zwischen der mobilen Telefoneinheit 18 und der externen Kommunikationseinheit 16 basiert auf dem TCP Protokoll 64. Das TCP Protokoll 64 hat eine oberste Transportschicht 80 und eine darunterliegende Vermittlungsschicht 82, die ein Protokoll namens IP umfasst. Darunter liegen eine oder mehrere Netzwerkschichten 84, über die der physische Zugang zu einem Netz realisiert wird.

Über eine in der mobilen Telefoneinheit 18 ausgeführte Umsetzung 86 wird der erste oder SPL Header 60 oder genauer gesagt dessen Kommunikationsanweisungen oder-informationen in einen zweiten oder TCP Header 66 umgesetzt. Das Datenfeld wird unverändert in den TCPstrom übernommen und zusammen mit dem erstellten zweiten oder TCP Header 66 an die externe Kommunikationseinheit 16 gesendet. Analog verläuft der Datenstrom beziehungsweise die Umsetzung in die andere Richtung von der externen Kommunikationseinheit 16 zu der Kommunikationseinheit 14.

Eine entsprechende Gegenstelle beziehungsweise Konfiguration ist in der Schnittstelle oder App der mobilen Telefoneinheit 18 vorhanden, wobei die Verschlüsselungsfunktionen und die Verbindungen zu den Features dort nicht realisiert sind.

Als oberste Schicht ist eine HTTPS Schicht 88 vorgesehen, welche eine durchgehende Verschlüsselung erlaubt.

Dank des SPL Protokolls 56 kann mit geringem Aufwand eine sichere und einfach zu implementierende Kommunikationsverbindung geschaffen werden und zwar für Kommunikationsteilnehmer, die nicht direkt miteinander kommunizieren können.

### Bezugszeichenliste

- 10: System
- 12: Kommunikationseinheit
- 14: Gerät
- 16: externe Kommunikationseinheit
- 18: mobile Telefoneinheit
- 20: Funktionalität
- 22: Funktionalität
- 24: Funktionalität
- 26: Core-Services
- 28: Network Manager
- 30: SPL Socket
- 32: Accessory Protocol Support
- 34: serielle Schnittstelle
- 36: serielle Schnittstelle
- 38: Software
- 40: SPL Socket
- 42: TCP Socket
- 44: Schnittstelle
- 46: Schnittstelle
- 48: Funktionalität
- 50: Funktionalität
- 52: serielle Verbindung
- 54: TCP Verbindung
- 56: SPL Protokoll
- 58: Accessory Protokoll
- 60: erster Header
- 62: Datenfeld
- 64: TCP Protokoll
- 66: zweiter Header
- 68: erster Schritt
- 70: zweiter Schritt
- 72: dritter Schritt
- 74: vierter Schritt
- 76: bulk channel
- 78: USB Verbindung
- 80: Transportschicht
- 82: Vermittlungsschicht
- 84: Netzwerkschicht
- 86: Umsetzung
- 88: HTTPS Schicht

## Patentansprüche

1. Verfahren zur Kommunikation zwischen einer Kommunikationseinheit (12) eines Geräts (14) und einer externen Kommunikationseinheit (16) über eine mobile Telefoneinheit (18), wobei zwischen der Kommunikationseinheit (12) des Geräts (14) und der mobilen Telefoneinheit (18) eine serielle Verbindung (52) aufgebaut wird, wobei ein Protokoll (56) der seriellen Verbindung (52) ein Datenfeld (62) und einen ersten Header (60) aufweist, wobei zwischen der mobilen Telefoneinheit (18) und der externen Kommunikationseinheit (16) eine Verbindung (54) aufgebaut wird, wobei in der mobilen Telefoneinheit (18) aus dem ersten Header (60) ein zweiter Header (66) für die Verbindung (54) generiert wird, und wobei das Datenfeld (62) unverändert von der seriellen Verbindung (52) in die Verbindung (54) übertragen wird, **dadurch gekennzeichnet, dass** ein Aufbau einer Kommunikationsverbindung zwischen der Kommunikationseinheit (12) des Geräts (14) und der externen Kommunikationseinheit (16) erfolgt, wobei von der Kommunikationseinheit (12) über die serielle Verbindung (52) eine Socket-Anfrage (68) an die mobile Telefoneinheit (18) gestellt wird, von der mobilen Telefoneinheit (18) über die Verbindung (54) eine Nachricht zum Bereitstellen eines Sockets (70) an die externe Kommunikationseinheit (16) gesendet wird, von der externen Kommunikationseinheit (16) über die Verbindung (54) eine Nachricht zum bereitgestellten Socket (72) an die mobile Telefoneinheit (18) gesendet wird und von der mobilen Telefoneinheit (18) über die serielle Verbindung (52) eine Nachricht zum bereitgestellten Socket (74) an die Kommunikationseinheit (12) gesendet wird.

2. Verfahren nach Anspruch 1, **dadurch gekennzeichnet, dass** die serielle Verbindung (52) ein Protokoll gemäß Bluetooth Serial Port umfasst.

3. Verfahren nach Anspruch 1 oder 2, **dadurch gekennzeichnet, dass** die serielle Verbindung (52) ein Accessory Protokoll (58) der mobilen Telefoneinheit (18) umfasst.

4. Verfahren nach Anspruch 3, **dadurch gekennzeichnet, dass** die serielle Verbindung (52) eine USB-Verbindung (78) umfasst.

5. Verfahren nach einem der vorhergehenden Ansprüche, **dadurch gekennzeichnet, dass** die Verbindung (54) eine TCP/IP Verbindung ist.

6. Verfahren nach einem der vorhergehenden Ansprüche, **dadurch gekennzeichnet, dass** die Verbindung (54) und/oder die serielle Verbindung (52) verschlüsselt werden.

7. System mit einem Gerät (14) und einer mobilen Telefoneinheit (18), wobei das Gerät eine Kommunikationseinheit umfasst, wobei die Kommunikationseinheit (12) des Geräts (14) und die mobile Telefoneinheit (18) eingerichtet sind, miteinander eine serielle Verbindung (52) aufzubauen, wobei ein Protokoll (56) der seriellen Verbindung (52) ein Datenfeld (62) und einen ersten Header (60) aufweist, wobei die mobile Telefoneinheit (18) eingerichtet ist, mit einer externen Kommunikationseinheit (16) eine Verbindung (54) aufzubauen, wobei die mobile Telefoneinheit (18) eingerichtet ist, aus dem ersten Header (60) einen zweiten Header (66) für die Verbindung (54) zu generieren, und wobei die mobile Telefoneinheit (18) eingerichtet ist, das Datenfeld (62) unverändert von der seriellen Verbindung (52) in die Verbindung (54) zu übertragen, **dadurch gekennzeichnet, dass** die Kommunikationseinheit (12) zum Aufbau einer Kommunikationsverbindung zwischen der Kommunikationseinheit (12) des Geräts (14) und der externen Kommunikationseinheit (16) eingerichtet ist und dazu eingerichtet ist, über die serielle Verbindung (52) eine Socket-Anfrage (68) an die mobile Telefoneinheit (18) zu stellen, dass die mobile Telefoneinheit (18) eingerichtet ist, über die Verbindung (54) eine Nachricht zum Bereitstellen eines Sockets (70) an die externe Kommunikationseinheit (16) zu senden, dass die mobile Telefoneinheit (18) eingerichtet ist, über die Verbindung (54) eine Nachricht zum bereitgestellten Socket (72) von der externen Kommunikationseinheit (16) zu empfangen, und dass die mobile Telefoneinheit (18) eingerichtet ist, über die serielle Verbindung (52) eine Nachricht zum bereitgestellten Socket (74) an die Kommunikationseinheit (12) zu senden.

8. System nach Anspruch 7, **dadurch gekennzeichnet, dass** ein Socket Proxy Layer, SPL-, Socket (30) für die serielle Verbindung (52) vorgesehen ist.

9. System nach Anspruch 7 oder 8, **dadurch gekennzeichnet, dass** das Gerät (14) ein Fahrzeug ist.

10. System nach Anspruch 7 oder 8, **dadurch gekennzeichnet, dass** das Gerät (14) ein Haushaltsgerät ist.

## Claims

1. Method for communicating between a communication unit (12) of an apparatus (14) and an external communication unit (16) via a mobile telephone unit (18), wherein a serial connection (52) is set up between the communication unit (12) of the apparatus (14) and the mobile telephone unit (18), wherein a protocol (56) of the serial connection (52) has a data field (62) and a first header (60), wherein a connection (54) is set up between the mobile telephone unit (18) and the external communication unit (16), wherein a second header (66) for the connection (54) is generated from the first header (60) in the mobile telephone unit (18), and wherein the data field (62) is transmitted without change from the serial connection (52) to the connection (54), **characterized in that** an operation of setting up a communication connection between the communication unit (12) of the apparatus (14) and the external communication unit (16) takes place, wherein the communication unit (12) sends a socket request (68) to the mobile telephone unit (18) via the serial connection (52), the mobile telephone unit (18) transmits a message for providing a socket (70) to the external communication unit (16) via the connection (54), the external communication unit (16) transmits a message relating to the provided socket (72) to the mobile telephone unit (18) via the connection (54) and the mobile telephone unit (18) transmits a message relating to the provided socket (74) to the communication unit (12) via the serial connection (52).

2. Method according to Claim 1, **characterized in that** the serial connection (52) comprises a protocol according to Bluetooth Serial Port.

3. Method according to Claim 1 or 2, **characterized in that** the serial connection (52) comprises an accessory protocol (58) of the mobile telephone unit (18).

4. Method according to Claim 3, **characterized in that** the serial connection (52) comprises a USB connection (78) .

5. Method according to one of the preceding claims, **characterized in that** the connection (54) is a TCP/IP connection.

6. Method according to one of the preceding claims, **characterized in that** the connection (54) and/or the serial connection (52) is/are encrypted.

7. System having an apparatus (14) and a mobile telephone unit (18), wherein the apparatus comprises a communication unit, wherein the communication unit (12) of the apparatus (14) and the mobile telephone unit (18) are configured to set up a serial connection (52) to one another, wherein a protocol (56) of the serial connection (52) has a data field (62) and a first header (60), wherein the mobile telephone unit (18) is configured to set up a connection (54) to an external communication unit (16), wherein the mobile telephone unit (18) is configured to generate a second header (66) for the connection (54) from the first header (60), and wherein the mobile telephone unit (18) is configured to transmit the data field (62) without change from the serial connection (52) to the connection (54), **characterized in that** the communication unit (12) is configured to set up a communication connection between the communication unit (12) of the apparatus (14) and the external communication unit (16) and is configured to send a socket request (68) to the mobile telephone unit (18) via the serial connection (52), **in that** the mobile telephone unit (18) is configured to transmit a message for providing a socket (70) to the external communication unit (16) via the connection (54), **in that** the mobile telephone unit (18) is configured to receive a message relating to the provided socket (72) from the external communication unit (16) via the connection (54), and **in that** the mobile telephone unit (18) is configured to transmit a message relating to the provided socket (74) to the communication unit (12) via the serial connection (52).

8. System according to Claim 7, **characterized in that** a Socket Proxy Layer, SPL, socket (30) is provided for the serial connection (52).

9. System according to Claim 7 or 8, **characterized in that** the apparatus (14) is a vehicle.

10. System according to Claim 7 or 8, **characterized in that** the apparatus (14) is a household appliance.

## Revendications

1. Procédé de communication entre une unité de communication (12) d'un appareil (14) et une unité de communication externe (16) par l'intermédiaire d'une unité de téléphonie mobile (18), dans lequel une liaison série (52) est établie entre l'unité de communication (12) de l'appareil (14) et l'unité de téléphonie mobile (18), dans lequel un protocole (56) de la liaison série (52) comporte un champ de données (62) et un premier entête (60), dans lequel une liaison (54) est établie entre l'unité de téléphonie mobile (18) et l'unité de communication externe (16), dans lequel un deuxième entête (66) est généré pour la liaison (54) dans l'unité de téléphonie mobile (18) à partir du premier entête (60), est dans lequel le champ de données (62) est transmis sans être modifié de la liaison série (52) à la liaison (54), **caractérisé en ce que** l'établissement d'une liaison de communication entre l'unité de communication (12) de l'appareil (14) et l'unité de communication externe (16) est effectué, dans lequel un appel de prise (68) est envoyé à l'unité de téléphonie mobile (18) par l'unité de communication (12) par l'intermédiaire de la liaison série (52), un message destiné à fournir une prise (70) est envoyé à l'unité de communication externe (16) par l'unité de téléphonie mobile (18) par l'intermédiaire de la liaison (54), un message destiné à fournir une prise (72) est envoyé à l'unité de téléphonie mobile (18) par l'unité de communication externe (16) par l'intermédiaire de la liaison (54) et un message destiné à fournir une prise (74) est envoyé à l'unité de communication (12) par l'unité de téléphonie mobile (18) par l'intermédiaire de la liaison série (52).

2. Procédé selon la revendication 1, **caractérisé en ce que** la liaison série (52) comprend un protocole conforme au port série Bluetooth.

3. Procédé selon la revendication 1 ou 2, **caractérisé en ce que** la liaison série (52) comprend un protocole d'accessoire (58) de l'unité de téléphonie mobile (18).

4. Procédé selon la revendication 3, **caractérisé en ce que** la liaison série (52) comprend une liaison USB (78).

5. Procédé selon l'une des revendications précédentes, **caractérisé en ce que** la liaison (54) est une liaison TCP/IP.

6. Procédé selon l'une des revendications précédentes, **caractérisé en ce que** la liaison (54) et/ou la liaison série (52) sont cryptées.

7. Système comportant un appareil (14) et une unité de téléphonie mobile (18), dans lequel l'appareil comprend une unité de communication, dans lequel l'unité de communication (12) de l'appareil (14) et l'unité de téléphonie mobile (18) sont conçues pour établir une liaison série (52) l'un avec l'autre, dans lequel un protocole (56) de la liaison série (52) comporte un champ de données (62) et un premier entête (60), dans lequel l'unité de téléphonie mobile (18) est conçue pour établir une liaison (54) avec une unité de communication externe (16), dans lequel l'unité de téléphonie mobile (18) est conçue pour générer un deuxième entête (66) destiné à la liaison (54) à partir du premier entête (60), et dans lequel l'unité de téléphonie mobile (18) est conçue pour transmettre sans le modifier le champ de données (62) de la liaison série (52) à la liaison (54), **caractérisé en ce que** l'unité de communication (12) est conçue pour établir une liaison de communication entre l'unité de communication (12) de l'appareil (14) et l'unité de communication externe (16) et est conçu pour envoyer un appel de prise (68) à l'unité de téléphonie mobile (18) par l'intermédiaire de la liaison série (52), **en ce que** l'unité de téléphonie mobile (18) est conçue pour envoyer à l'unité de communication externe (16) par l'intermédiaire de la liaison (54) un message destiné à fournir une prise (70), **en ce que** l'unité de téléphonie mobile (18) est conçue pour recevoir en provenance l'unité de communication externe (16) par l'intermédiaire de la liaison (54), un message destiné à fournir une prise (72) et **en ce que** l'unité de téléphonie mobile (18) est conçue pour envoyer à l'unité de communication (12) par l'intermédiaire de la liaison série (52) un message destiné à fournir une prise (74).

8. Système selon la revendication 7, **caractérisé en ce qu'**il est prévu une prise de type Socket Proxy Layer, SPL (30) pour la liaison série (52).

9. Système selon la revendication 7 ou 8, **caractérisé en ce que** l'appareil (14) est un véhicule.

10. Système selon la revendication 7 ou 8, **caractérisé en ce que** l'appareil (14) est un appareil électroménager.
